# EUROPEAN PATENT APPLICATION

(11) **EP 1 942 640 A1**
(43) Date of publication of application: **09.07.2008**
(21) Application number: 07116959.3
(22) Date of filing: 21.09.2007
(51) Int. Cl.: H04M 1/2745, G06F 17/30, G06F 3/048

(54) **Apparatus and method for displaying relation-based information in mobile terminal**

(30) Priority: 26.09.2006 KR 20060093387
(71) Applicant: Samsung Electronics Co., Ltd., Suwon-si, Gyeonggi-do 442-743 (KR)
(72) Inventor: Kim, Jung-Hun, Pusan (KR); Rhee, Young-Ho, Seoul (KR); Kim, Jae-Hwan, Gyeonggi-do (KR)
(74) Representative: Grünecker, Kinkeldey, Stockmair & Schwanhäusser Anwaltssozietät

(57) **Abstract**

Provided is an apparatus and method for displaying relation-based information in a mobile terminal. The method includes, upon a receipt of a request for displaying the relation-based information, searching storage data for the relation-based information on a search target, sorting, by function, the searched relation-based information and creating and displaying icons having each function an icon bar, displaying, as a background image, image information on the search target among the searched relation-based information, and upon the selection of an icon from the displayed icon bar, providing the sorted relation-based information depending on a function of the selected icon.

## Description

The present invention relates generally to an apparatus and method for displaying relation-based information in a mobile terminal, and in particular, to an apparatus and method for searching and displaying relation-based information on a search target by name without collecting and displaying several pieces of storage information on a per-function basis in a mobile terminal.

In recent years, a mobile terminal such as a mobile communication terminal or a Personal Digital Assistant (PDA) is in great use. The mobile terminal is increasing, as time goes by, its scope of utilization such as photographing an image or a video by being equipped with a digital camera, viewing satellite broadcasting, editing a document, playing a game, navigating, listening to music, and transmitting/receiving a short message and a multimedia message attached with a photographed image or a video, as well as simple telephony or schedule management. As the mobile terminal has various functions as above, its storage capacity is greatly increasing in kind.

In general, the mobile terminal sorts by function storage information on respective functions and stores the sorted storage information. Even when searching for information, the mobile terminal sorts the searched information by function and displays the sorted information. For example, in a case where the mobile terminal searches for a call record, it distinguishes the searched call record into an incoming telephony, an outgoing telephony, and a missed telephony and displays the distinguished call record. However, the call record is not sorted by name. This is also similar with a short message, a multimedia message, a photograph, and a video as well as the call record.

Like this, the mobile terminal searches storage information on a per-function basis. Therefore, there is an inconvenience that when intending to search storage information (e.g. a call record for one called party, information on short message transmission/reception, and a photograph), a calling party has to search each of the storage information on a per-function basis to find out relation information on a search target.

Thus, in addition to a function-based searching method, a method for searching a search target in consideration of a relation basis and displaying relation-based information on the search target is being required.

The object of the present invention is to substantially solve at least the above problems and/or disadvantages and to provide at least the advantages below. Accordingly, an aspect of the present invention is to provide an apparatus and method for displaying relation-based information in a mobile terminal.

This object is solved by the subject matter of the independent claims.

Preferred embodiments are defined in the dependent claims.

Another aspect of the present invention is to provide an apparatus and method for searching several pieces of storage information for relation-based information, which is based on relationship to a search target, in a mobile terminal.

A further aspect of the present invention is to provide an apparatus and method for searching several pieces of storage information for relation-based information, which is based on relationship to a search target, and displaying the searched relation-based information in a mobile terminal.

A still another aspect of the present invention is to provide an apparatus and method for sorting, by function, searched relation-based information on a search target and displaying the sorted relation-based information in a mobile terminal.

A yet another aspect of the present invention is to provide an apparatus and method for displaying a photograph of a search target as a background image when displaying relation-based information in a mobile terminal.

According to one aspect of the present invention, there is provided a method for displaying relation-based information in a mobile terminal. The method includes, upon a receipt of a request for displaying the relation-based information, searching storage data for the relation-based information on a search target; sorting by function the searched relation-based information and creating and displaying icons having each function as an icon bar; displaying, as a background image, image information on the search target among the searched relation-based information; and upon the selection of an icon from the displayed icon bar, providing the sorted relation-based information depending on a function of the selected icon.

According to another aspect of the present invention, there is provided a method for displaying relation-based information in a mobile terminal. The method includes, upon a receipt of a request for displaying the relation-based information, searching storage data for the relation-based information on a search target; sorting by function the searched relation-based information and displaying a list of functions; and upon the selection of one function from the displayed list, providing the sorted relation-based information depending on the selected function.

According to a further aspect of the present invention, there is provided an apparatus for displaying relation-based information in a mobile terminal. The apparatus includes a display unit for displaying the relation-based information; a memory for storing storage data; a search unit for searching the storage data for the relation-based information on a search target; an icon bar creator for sorting by function the searched relation-based information and creating icons having functions as an icon bar; a background image processor for displaying, as a background image, image information on the search target among the searched relation-based information; and a relation-basis processor for, when detecting a request for displaying the relation-based information on the search target, processing and searching the relation-based information on the search target using the search unit, displaying the icon bar created using the icon bar creator on the display unit, displaying the background image on the display unit using the background image processor, and when an icon is selected from the icon bar, controlling the display unit to display the sorted relation-based information depending on a function of the selected icon.

According still another aspect of the present invention, there is provided an apparatus for displaying relation-based information in a mobile terminal. The apparatus includes a display unit for displaying the relation-based information; a memory for storing storage data; a search unit for searching the storage data for the relation-based information on a search target; a list creator for sorting by function the searched relation-based information and creating a list of functions; and a relation-basis processor for, when detecting a request for displaying the relation-based information on the search target, processing and searching the relation-based information on the search target using the search unit, displaying the list created by the list creator on the display unit, and when a function is selected from the list, controlling the display unit to display the sorted relation-based information depending on the selected function.

The above and other objects, features and advantages of the present invention will become more apparent from the following detailed description when taken in conjunction with the accompanying drawings in which:
FIG. 1 illustrates architecture of a mobile terminal for searching and displaying relation-based information according to the present invention;
FIG. 2 illustrates a screen for displaying a call record among relation-based information in the mobile terminal according to the present invention; and
FIG. 3 is a flowchart of a procedure of searching and displaying relation-based information in the mobile terminal according to the present invention.

Preferred embodiments of the present invention will be described herein below with reference to the accompanying drawings. In the following description, well-known functions or constructions are not described in detail since they would obscure the invention in unnecessary detail.

The present invention provides an apparatus and method for searching relation-based information on a search target, sorting by function the searched relation-based information, and displaying the sorted relation-based information in a mobile terminal.

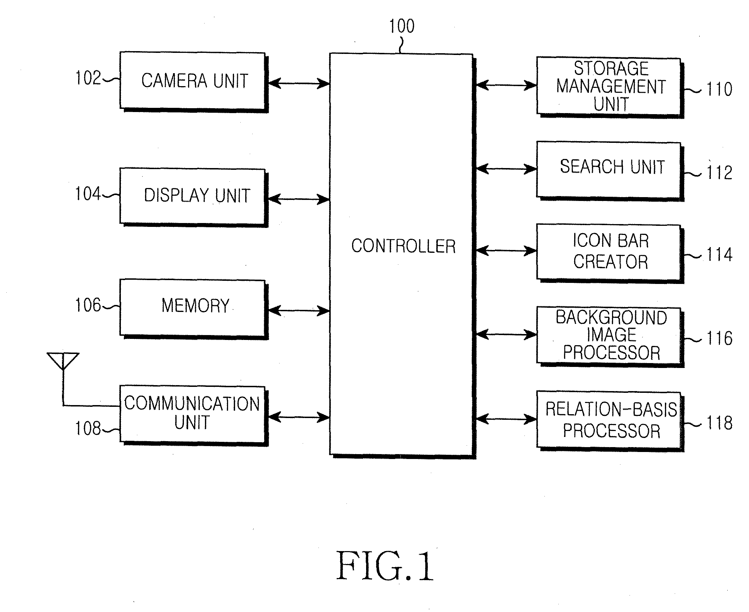

FIG. 1 illustrates architecture of a mobile terminal for searching and displaying relation-based information according to the present invention. Referring to FIG. 1, the mobile terminal includes a controller 100, a camera unit 102, a display unit 104, a memory 106, a communication unit 108, a storage management unit 110, a search unit 112, an icon bar creator 114, a background image processor 116, and a relation-basis processor 118.

The camera unit 102 photographs an image or a video using the photoelectric conversion of an optical image incident on a Charge-Coupled Device (CCD) under the control of the controller 100.

The display unit 104 displays state information (or an indicator), limited numerals and characters, a video, and a still picture generated during operation of the mobile terminal, and displays relation-based information under the control of the controller 100. The display unit 104 can use a color Liquid Crystal Display (LCD).

The memory 106 temporarily stores a program for controlling a general operation of the mobile terminal and data generated during the operation. The memory 106 stores storage data such as a telephone number, a short message, a multimedia message, a photograph, and a video.

In a reception mode, the communication unit 108 receives a radio frequency signal through an antenna and processes the received signal by frequency down, despreading, and channel decoding. In a transmission mode, the communication unit 108 processes data by channel coding, spreading, and frequency up and transmits the processed data through the antenna.

The storage management unit 110 stores storage data so that the storage data can be sorted by relation-based information. The storage management unit 110 sets and stores a short message, a multimedia message, a call record, a photograph, and a video so that the search unit 112 can search for a relation basis. In detail, the short message, the multimedia message, and the call record can be identified in relationship to a target only by their information. The photograph and the video cannot be identified in relationship to a target and therefore, the storage management unit 110 includes and stores a sort-identifier in a storage file name so that the search unit 112 can search and identify a related target, in a case where there exists the related target in a phonebook.

If using a face recognition technique to store a photograph, the storage management unit 110 can store a related target so that the search unit 112 can automatically search and identify the related target through comparison with a previously stored photograph.

The search unit 112 searches the memory 106 for relation-based information on a search target in accordance with a request of the relation-basis processor 118.

The icon bar creator 114 sorts by function the relation-based information searched in the search unit 112, creates icons of functions in a bar form, and displays the created icons on the display unit 104. The icons are created and arranged in regular sequence depending on a frequency of use of the icons.

The background image processor 116 displays, as a background image, photograph information among the relation-based information searched in the search unit 112 in accordance with a request of the relation-basis processor 118. A photograph displayed as the background image is an image preset as a background image or an image randomly selected from the photograph information searched in the search unit 112. The photograph displayed as the background image can be one or more. More than one photograph can be changed while being displayed at a predetermined time interval in a slide show.

The relation-basis processor 118 detects a request for displaying relation-based information. If detecting the request, the relation-basis processor 118 searches relation-based information on a search target using the search unit 112. The relation-basis processor 118 displays the icon bar created by the icon bar creator 114 on the display unit 104. The relation-basis processor 118 displays a background image on the display unit 104 using the background image processor 116. If an icon is selected from the icon bar, the relation-basis processor 118 processes and displays relation-based information sorted by a function of the selected icon.

The controller 100 controls the storage management unit 110, the search unit 112, the icon bar creator 114, the background image processor 116, and the relation-basis processor 118. In detail, the controller 100 can perform functions of the storage management unit 110, the search unit 112, the icon bar creator 114, the background image processor 116, and the relation-basis processor 118. The present invention separately constructs and shows constituent elements in order to distinguish and describe respective functions of the constituent elements. Thus, when a product is actually realized, it can be constructed so that the controller 100 can process all of the constituent elements. Alternately, it can be constructed so that the controller 100 can process only part of them.

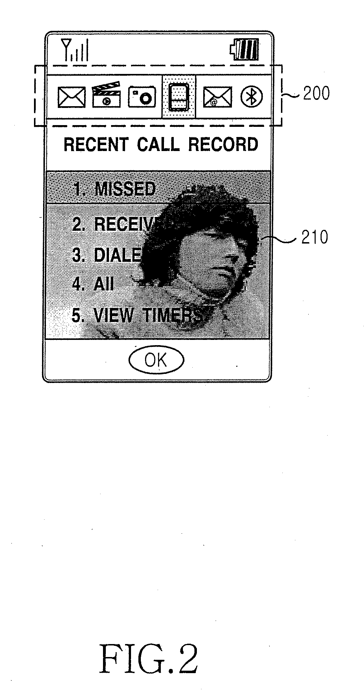

A screen for displaying relation-based information in the mobile terminal of FIG. 1 will be described with reference to FIG. 2 below. FIG. 2 illustrates a screen for displaying a call record among relation-based information in the mobile terminal according to the present invention.

Referring to FIG. 2, the display screen is a screen for searching a call record for a search target. The display screen displays an icon bar 200, a list of call records, and a background image 210. The list is to enable selection of a missed call record ("Missed"), an incoming call record ("Received"), an outgoing call record ("Dialed"), and all call records ("All"), which are sorted call records, and call time information ("View Timers"). From the icon bar 200, it can be appreciated that relation-based information on a search target includes a short message, a video, a photograph, a call record, a multimedia message, and Bluetooth® information in kind in regular sequence. Arrangement sequence represents a frequency of use of each function.

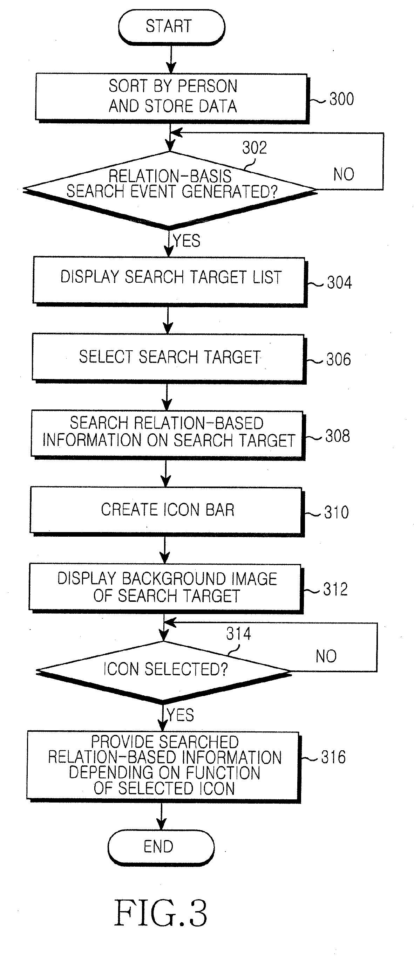

A method for searching and displaying relation-based information in the mobile terminal according to the present invention will be described with reference to FIG. 3 below.

FIG. 3 is a flowchart of a procedure of searching and displaying relation-based information in the mobile terminal according to the present invention. Referring to FIG. 3, when data to be stored is generated, the mobile terminal stores the data so that the data can be sorted by relation-based information on each target in Step 300. In Step 302, the mobile terminal checks whether a relation-based search event is generated. If it is checked that the relation-based search event is generated, in Step 304, the mobile terminal displays a search target list that is a list of search targets to be searched. The search target list can be a list of those who are listed in a kind of phonebook.

In Step 306, the mobile terminal selects a search target from the search target list. In Step 308, the mobile terminal searches for relation-based information, which is information on the search target. In Step 310, the mobile terminal sorts, by function, the searched relation-based information and creates and displays bar type icons having functions. The icons of the icon bar are arranged in regular sequence depending on a frequency of use with a search target and are displayed.

In Step 312, the mobile terminal displays, as a background image, photograph information among the searched relation-based information. In a case where a background image of a search target is preset, the mobile terminal displays the preset image as the background image. In other cases, the mobile terminal randomly selects and displays an image of a search target as the background image. The mobile terminal can display only one image. Alternately, the mobile terminal can change while displaying several images at a predetermined time interval in a slide show.

In Step 314, the mobile terminal checks whether the icon is selected from the icon bar. If it is checked that the icon is selected, in Step 316, the mobile terminal provides the searched relation-based information depending on a function of the selected icon.

As described above, the present invention provides the apparatus and method for searching the relation-based information on the search target, sorting, by function, the searched relation-based information, and displaying the sorted relation-based information in the mobile terminal. The present invention has an effect of collecting and displaying related information on a per-search-target basis in the mobile terminal, thereby promoting a user convenience.

While the invention has been shown and described with reference to certain preferred embodiments thereof, it will be understood by those skilled in the art that various changes in form and details may be made therein without departing from the scope of the invention as defined by the appended claims.

## Claims

1. A method for displaying relation-based information in a mobile terminal, the method comprising:
upon receipt of a request for displaying the relation-based information, searching storage data for the relation-based information on a search target;
sorting, by function, the searched relation-based information and displaying a list of functions; and
upon the selection of one function from the displayed list, providing the sorted relation-based information depending on the selected function.

2. The method of claim 1, wherein the list of functions is a plurality of icons having each function as an icon bar, the method further comprising:
creating the icons; and
displaying, as a background image, image information on the search target among the searched relation-based information,
wherein selection of a function is performed by selection of an icon from the displayed icon bar.

3. The method of claim 1 or 2, further comprising before searching the relation-based information:
sorting and storing the storage data in a case where the storage data can be sorted by the relation-based information; and
composing a sort-identifier in the storage data and storing the storage data with the sort-identifier, in a case where the storage data cannot be sorted by the relation-based information.

4. The method of claim 3, wherein the storage data is all data on the search target, managed in the mobile terminal and includes a call record, short messages, multimedia messages, images, video, and Bluetooth® connection information.

5. The method of claim 2, wherein in the displaying of the image information, an image that is preset as a background image of the search target is displayed.

6. The method of claim 2, wherein in the displaying of the image information, in a case where a plurality of images are preset as a background image of the search target, the plurality of preset images are displayed, while being changed at a predetermined time interval.

7. The method of claim 2, wherein in the displaying of the image information, an image randomly selected from the image information on the search target, which is the searched relation-based information, is displayed.

8. The method of claim 2, wherein in the displaying of the image information, an image to be displayed as the background image is randomly selected at a predetermined time interval from the image information on the search target, which is the searched relation-based information, and the selected image is displayed.

9. The method of one of claims 2 to 8, wherein in the creating and displaying of the icon bar, the icons are arranged in a regular sequence according to a frequency of use of the icons when the icon bar is created.

10. An apparatus for displaying relation-based information in a mobile terminal, the apparatus comprising:
a display unit for displaying the relation-based information;
a memory for storing storage data;
a search unit for searching the storage data for the relation-based information on a search target;
a list creator for sorting, by function, the searched relation-based information and creating a list of functions; and
a relation-basis processor for, when detecting a request for displaying the relation-based information on the search target, processing and searching the relation-based information on the search target using the search unit, displaying the list created by the list creator on the display unit, and when a function is selected from the list, controlling the display unit to display the sorted relation-based information depending on the selected function.

11. The apparatus of claim 10, wherein the list creator is an icon bar creator for creating icons having functions as an icon bar, the apparatus further comprising:
a background image processor for displaying, as a background image, image information on the search target among the searched relation-based information,
wherein the relation-basis processor is further arranged for displaying the background image on the display unit using the background image processor, and when an icon is selected from the icon bar, controlling the display unit to display the sorted relation-based information depending on a function of the selected icon.

12. The apparatus of claim 10 or 11, further comprising a storage management unit for sorting and storing the storage data in the memory in a case where the storage data can be sorted by the relation-based information, and comprising a sort-identifier in the storage data and storing the storage data with the sort-identifier in the memory in a case where the storage data cannot be sorted by the relation-based information.

13. The apparatus of claim 12, wherein the storage data is all data on the search target, managed in the mobile terminal and includes a call record, short messages, multimedia messages, images, video, and Bluetooth® connection information.

14. The apparatus of claim 11, wherein the background image processor displays an image that is preset as a background image of the search target.

15. The apparatus of claim 11, wherein in a case where a plurality of images are preset as a background image of the search target, the background image processor changes displayed images, selected from the plurality of preset images, at a predetermined time interval.

16. The apparatus of claim 11, wherein the background image processor displays an image randomly selected from the image information on the search target that is the searched relation-based information.

17. The apparatus of claim 11, wherein the background image processor randomly selects, at a predetermined time interval, an image to be displayed as the background image from the image information on the search target that is the searched relation-based information, and displays the selected image.

18. The apparatus of one of claims 11 to 17, wherein when creating the icon bar, the icon bar creator arranges the icons in regular sequence according to a frequency of use of the icons.
